# DEMANDE DE BREVET EUROPEEN

(11) **EP 2 221 090 A1**
(43) Date de publication de la demande: **25.08.2010**
(21) Numéro de dépôt: 10153398.2
(22) Date de dépôt: 12.02.2010
(51) Int. Cl.: A62B 35/04, B64C 31/028, B64C 31/036, B64D 17/30, B64D 1/14

(54) **Dispositif d'amortissement de chocs pour sellette de parapente**

(30) Priorité: 18.02.2009 FR 0951060
(71) Demandeur: Sup'Air, 74650 Chavanod (FR)
(72) Inventeur: Bouilloux, Pierre, 74540, VIUZ LA CHIESAZ (FR)
(74) Mandataire: Gasquet, Denis

(57) **Abrégé**

Sellette (2) de parapente, comportant un dispositif d'amortissement de chocs (1) constitué par une enveloppe souple disposée sous l'assise de la sellette, caractérisé en ce que le dispositif d'amortissement est destiné à être gonflée par le flux d'air crée par le déplacement de la sellette, ladite enveloppe souple comprenant une paroi inférieure (15) qui comprend une ouverture d'entrée d'air (12) permettant l'entrée du flux d'air à l'intérieur de l'enveloppe, tandis qu'afin de faciliter l'entrée d'air et de maintenir l'enveloppe sous sa forme gonflée, il est prévu des moyens pour maintenir ladite enveloppe sensiblement dans la forme qu'elle a en position gonflée, ces moyens étant constitués par un organe raidisseur (14) constitué par une tige souple, rigide voir semi-rigide mise en forme, ledit étrier ayant la forme de U ouvert vers l'avant (A) associé à la paroi inférieure (15) de l'enveloppe souple.

## Description

La présente invention concerne un dispositif d'amortissement de chocs destiné à être disposé dans une sellette du type de celle utilisée dans les sports de vol libre, tel que le parapente.

Ces dernières années, la pratique du parapente s'est développée rapidement et ce loisir attire ainsi de plus en plus de pratiquants amateurs de sensations. De ce fait, le matériel utilisé par les pratiquants a considérablement été modifié et s'est modernisé durant ces dernières années. Ce développement technique a permis d'augmenter la sécurité et de diminuer les risques d'accidents. Cependant, ce sport comporte malgré tout des risques que l'on cherche à diminuer le plus possible. Pour ce faire, il existe des amortisseurs de chocs ou dispositifs d'amortissement constitués par un ou plusieurs pains de mousse destinés à être disposés dans la sellette du parapente afin d'amortir les chocs pouvant être occasionnés, notamment lors d'atterrissages difficiles. Ces dispositifs sont par exemple divulgués par les brevets antérieurs, par exemple autrichien AT 397 950 ou encore français N°2 768 698.

Ces dispositifs d'amortissement de l'art antérieur permettent de minimiser les conséquences d'un choc lors d'une fausse manoeuvre à l'atterrissage, ledit choc s'effectuant généralement au niveau du bas de la colonne vertébrale puisque le pratiquant vole assis. Cependant, ces dispositifs d'amortissement de chocs présentent encore de nombreux inconvénients et leurs performances ne sont pas suffisantes pour assurer une sécurité importante à l'utilisateur.

Ainsi, l'invention se propose de résoudre les problèmes précités des dispositifs d'amortissement traditionnels grâce à des moyens simples, fiables, destinés, d'une part à obtenir une capacité d'amortissement plus importante, et d'autre part à faciliter son utilisation en réduisant considérablement son volume hors utilisation.

Ainsi, la sellette de parapente, selon l'invention comporte un dispositif d'amortissement de chocs constitué par une enveloppe souple disposée sous l'assise de la sellette, est **caractérisé en ce que** le dispositif d'amortissement est destinée à être gonflée par le flux d'air crée par le déplacement de la sellette, ladite enveloppe souple comprenant une paroi inférieure qui comprend une ouverture d'entrée d'air permettant l'entrée du flux d'air à l'intérieur de l'enveloppe, tandis qu'afin de faciliter l'entrée d'air et de maintenir l'enveloppe sous sa forme gonflée, il est prévu des moyens pour maintenir ladite enveloppe sensiblement dans la forme qu'elle a en position gonflée, ces moyens étant constitués par un organe raidisseur constitué par une tige rigide voir semi-rigide mise en forme, ledit étrier ayant la forme de U ouvert vers l'avant associé à la paroi inférieure de l'enveloppe souple.

Selon une caractéristique complémentaire, la tige constituant l'organe raidisseur est un profilé cylindrique en métal ou en matériau composite.

Selon une autre caractéristique complémentaire, l'ouverture d'entrée d'air qui est un trou dans la paroi inférieure de l'enveloppe est disposée sur la face orientée vers l'avant de ladite paroi inférieure.

Ajoutons qu'il est prévu que l'enveloppe comprenne un clapet de fermeture permettant d'emprisonner l'air de l'enveloppe.

Selon une autre caractéristique, le clapet de fermeture est constitué par une paroi mobile disposée à l'intérieur de l'enveloppe, au niveau de l'ouverture d'entrée d'air, et cette paroi mobile s'étend à l'intérieur de l'enveloppe depuis la bordure avant de la paroi inférieure à laquelle elle est fixée latéralement par exemple par couture, sur une longueur pour s'étendre au-delà du trou, et ce pour le recouvrir par l'intérieur.

Selon le mode préféré de l'invention, la zone de la paroi inférieure où se trouve l'ouverture d'entrée d'air est rigidifiée par une paroi de rigidification qui est fixée à la paroi inférieure par une couture périphérique faite au niveau du trou.

Précisons aussi que selon le mode de réalisation préféré, l'enveloppe souple constituant avec l'air qui s'y est introduit lors de la progression de la sellette, a selon une vue latérale sensiblement la forme de croissant bombé dans sa partie centrale inférieure, tandis que cette enveloppe souple qui est fixée sous la sellette, et plus particulièrement sous l'assise de la sellette s'étend en arrière au-delà du plan du dossier.

Précisons aussi que l'enveloppe souple est avantageusement réalisée en tissu hermétique à l'air.

D'autres caractéristiques et avantages de l'invention se dégageront de la description qui va suivre en regard des dessins annexés qui ne sont donnés qu'à titre d'exemples non limitatifs.
La figure 1 représente en perspective un parapentiste dans sa sellette.
La figure 2 représente en perspective la sellette avec le dispositif d'amortissement de l'invention.

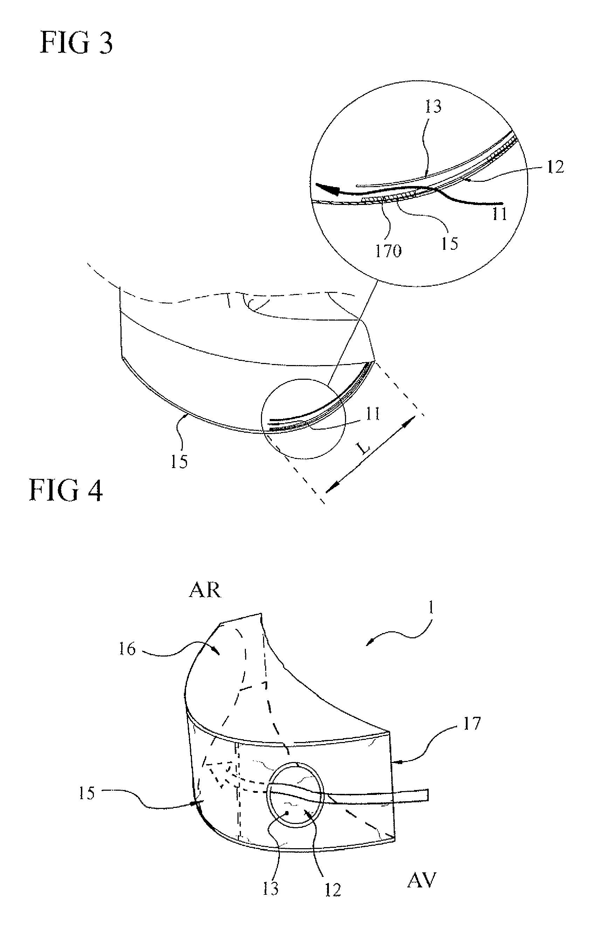

La figure 3 représente en coupe verticale longitudinale le dispositif d'amortissement.
La figure 4 est une vue de dessous en perspective du dispositif d'amortissement de l'invention.

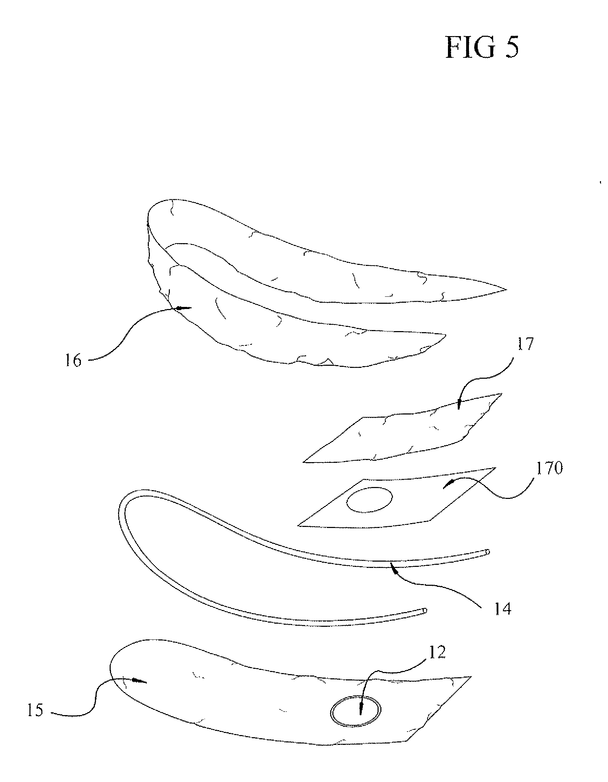

La figure 5 est une vue en éclatée du dispositif d'amortissement.

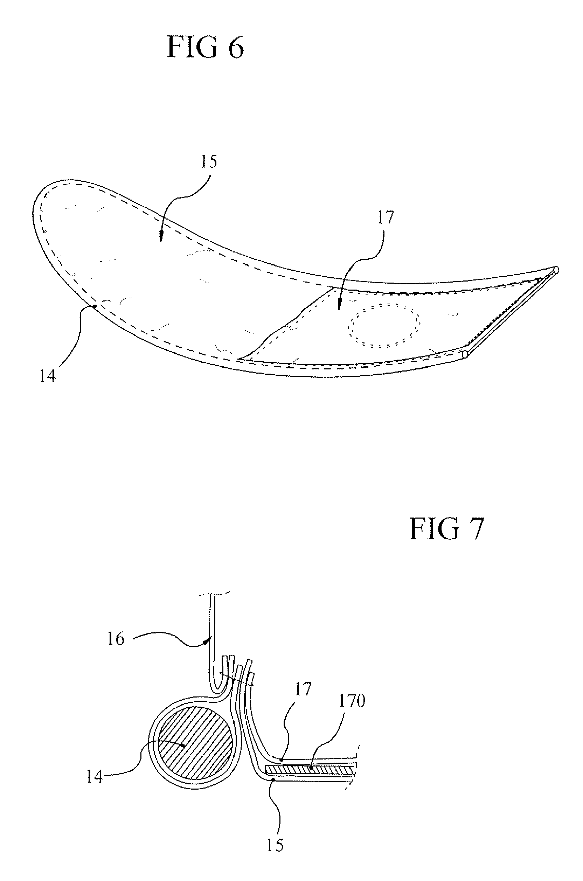

La figure 6 représente la paroi inférieure de l'enveloppe souple du dispositif d'amortissement avec son clapet anti retour, et sa paroi de rigidification ainsi que son raidisseur.
La figure 7 est une vue de détails selon une coupe faite au niveau de l'organe raidisseur.

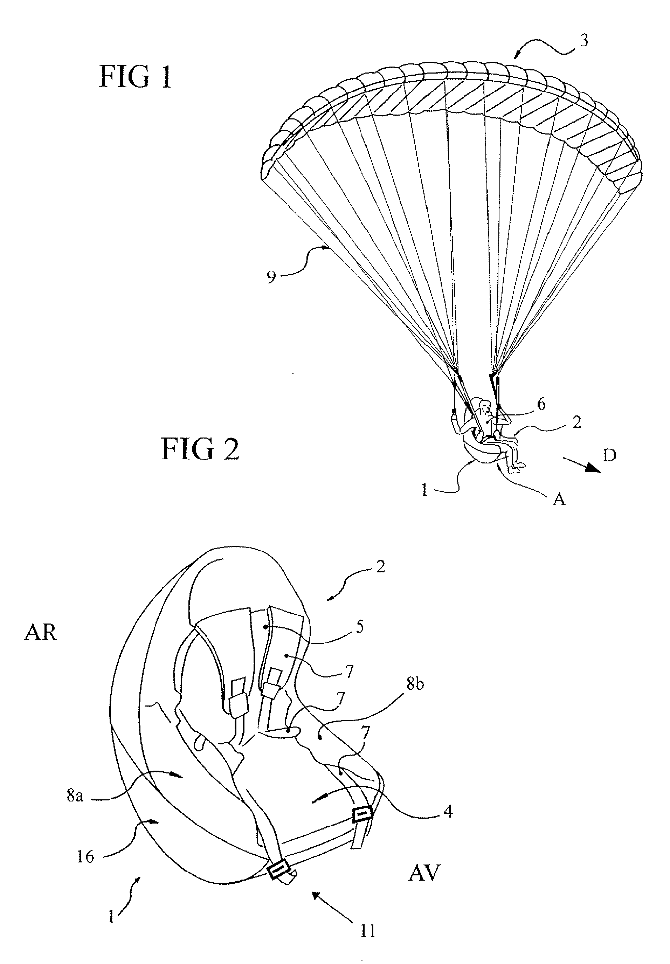

Le dispositif d'amortissement de chocs selon l'invention, portant la référence générale (1), est destiné à équiper une sellette (2) et préférentiellement une sellette du type de celles utilisées pour la pratique du vol libre et du parapente (3), dont il est donné une illustration à titre d'exemple par la figure 1.

La sellette (2) équipée du dispositif de l'invention (1), est du type comportant une assise (4) sensiblement horizontale prolongée à l'arrière et vers le haut, par une paroi d'appui dorsale ou dossier (5) de manière à permettre l'installation de l'utilisateur (6). A cet effet la sellette comprend de façon connue en soit un ensemble de sangles de retenue (7) destinées à permettre à l'utilisateur de s'harnacher complètement avec la sellette (2) de manière confortable, et d'y être retenu de façon sure et fiable. La sellette (2) comprend avantageusement deux parois latérales (8a, 8b) réalisées par exemple en tissus, qui prolongent latéralement et vers le haut l'assise (4) auxquelles sont retenues les suspentes (9) du parapente (3).

Comme cela a été exprimé précédemment, la sellette (2) comprend un dispositif d'amortissement de chocs (1), permettant d'amortir les chocs pouvant être occasionnés lors d'une mauvaise manoeuvre à l'atterrissage, ledit choc s'effectuant généralement au niveau du bas de la colonne vertébrale puisque le pratiquant vole assis.

Selon l'invention, le dispositif d'amortissement (1) est constitué par une enveloppe souple destinée à être gonflée par le flux d'air (11) crée par le déplacement (D) de la sellette.

A cet effet l'enveloppe souple qui est disposée sous l'assise (4), présente une ouverture (12), permettant l'entrée du flux d'air à l'intérieur de l'enveloppe souple. Par ailleurs après gonflage l'air contenu dans l'enveloppe est maintenu dans cette enveloppe grâce à un clapet de fermeture, ce qui permet à l'air d'être emprisonné dans l'enveloppe, supprimant ainsi tout risque de dégonflage intempestif.

Ainsi, l'enveloppe souple et plus précisément sa paroi inférieure (15), présente une face orientée vers l'avant, et c'est cette face qui comprend l'ouverture (12), qui est par exemple un trou dans la paroi. Selon le mode de réalisation décrit à titre d'exemple le trou d'entrée d'air est rond. A l'intérieur de l'enveloppe, il est prévu une paroi mobile (13) disposée au niveau du trou d'entrée d'air (12), et recouvrant ce dernier, et c'est cette paroi mobile réalisée par exemple en tissu synthétique qui constitue le clapet évoqué précédemment.

L'enveloppe souple est formée par un tissu étanche à l'air comme, par exemple, un tissu en polychlorure de vinyle ou "PVC" et peut être constituée de plusieurs morceaux cousus ou soudés entre eux par un procédé de manière à obtenir une étanchéité suffisante.

L'enveloppe souple constituant avec l'air qui s'y est introduit lors de la progression de la sellette, a, selon le mode de réalisation préféré du dispositif et tel qu'illustré selon une vue latérale, sensiblement la forme de croissant bombé dans sa partie centrale inférieure. Afin de faciliter l'entrée d'air et de maintenir l'enveloppe sous sa forme gonflée, il est prévu des moyens pour maintenir ladite enveloppe sensiblement dans la forme qu'elle a en position gonflée. Ces moyens sont constitués par un organe raidisseur (14) constitué par une tige rigide mise en forme.

Nous allons décrire ci-après cette enveloppe souple qui est fixée sous la sellette, et plus particulièrement sous l'assis (4) de la sellette pour s'étendre derrière au-delà du plan (P) du dossier (5).

L'enveloppe souple est constituée par une paroi inférieure (15) à laquelle est associée une paroi latérale (16) s'étendant vers le haut pour relier la paroi inférieure (15) à l'assise (4) de la sellette.

La paroi latérale (16) est en tissu souple et forme un "U" ouvert vers l'avant (AV).

La paroi inférieure (15) est maintenue en forme par l'organe raidisseur (14), qui est un étrier en forme de "U " réalisé par un jonc ou une tige souple, ou rigide mise en forme et maintenu en forme par exemple dans une couture. Cette tige est par exemple un profilé cylindrique en métal ou en fibre, matériaux composites ou autre.

Selon le mode préféré cet organe raidisseur est un étrier en forme de U ouvert vers l'avant (AV) associé à la paroi inférieure (15) de l'enveloppe souple.

La paroi mobile (13) formant clapet anti-retour s'étend à l'intérieur de l'enveloppe depuis la bordure avant (17) de la paroi inférieure (15) à laquelle elle est fixée par exemple par couture, sur une longueur (L) suffisante pour s'étendre au-delà du trou (12), et ce pour le recouvrir par l'intérieur. On notera aussi que les bordures latérales de la paroi anti-retour sont fixées à la paroi inférieure (13).

Par ailleurs, la zone de la paroi inférieure (15) où se trouve l'ouverture d'entrée d'air (12) est avantageusement rigidifiée par une paroi de rigidification (170) qui est fixée à la paroi inférieure par une couture périphérique faite au niveau du trou.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Sellette (2) de parapente (10), comportant un dispositif d'amortissement de chocs (1) constitué par une enveloppe souple disposée sous l'assise (4) de la sellette, **caractérisé en ce que** le dispositif d'amortissement est destiné à être gonflée par le flux d'air (11) crée par le déplacement de la sellette, ladite enveloppe souple comprenant une paroi inférieure (15) qui comprend une ouverture d'entrée d'air (12) permettant l'entrée du flux d'air à l'intérieur de l'enveloppe, tandis qu'afin de faciliter l'entrée d'air et de maintenir l'enveloppe sous sa forme gonflée, il est prévu des moyens pour maintenir ladite enveloppe sensiblement dans la forme qu'elle a en position gonflée, ces moyens étant constitués par un organe raidisseur (14) constitué par une tige souple, rigide voir semi-rigide mise en forme, ledit étrier ayant la forme de U ouvert vers l'avant (AV) associé à la paroi inférieure (15) de l'enveloppe souple.

2. Sellette (2) de parapente (10) selon la revendication 1, **caractérisée en ce que** la tige constituant l'organe raidisseur (14) est un profilé cylindrique en métal ou en matériau composite.

3. Sellette (2) de parapente (10) selon l'une quelconque des revendications précédentes, **caractérisée en ce que** l'ouverture d'entrée d'air (12) qui est un trou dans la paroi inférieure (15) de l'enveloppe est disposée sur la face orientée vers l'avant de ladite paroi inférieure (15).

4. Sellette (2) de parapente (10) selon la revendication 3, **caractérisée en ce que** l'enveloppe comprend un clapet de fermeture permettant d'emprisonner l'air de l'enveloppe.

5. Sellette (2) de parapente (10) selon la revendication 4, **caractérisée en ce** le clapet de fermeture est constitué par une paroi mobile (13) disposée à l'intérieur de l'enveloppe, au niveau de l'ouverture d'entrée d'air, et cette paroi mobile (13) s'étend à l'intérieur de l'enveloppe depuis la bordure avant (17) de la paroi inférieure (15) à laquelle elle est fixée latéralement par exemple par couture, sur une longueur (L) suffisante pour s'étendre au-delà du trou (12), et ce pour le recouvrir par l'intérieur.

6. Sellette (2) de parapente (10) selon la revendication 5, **caractérisée en ce que** la zone de la paroi inférieure (15) ou se trouve l'ouverture d'entrée d'air (12) est rigidifiée par une paroi de rigidification (150) qui est fixée à la paroi inférieure par une couture périphérique faite au niveau du trou.

7. Sellette (2) de parapente (10) selon l'une quelconque des revendications précédentes, **caractérisée en ce que** l'enveloppe souple constituant avec l'air qui s'y est introduit lors de la progression de la sellette, a selon une vue latérale sensiblement la forme de croissant bombé dans sa partie centrale inférieure, tandis que cette enveloppe souple qui est fixée sous la sellette, et plus particulièrement sous l'assis (4) de la sellette s'étend en arrière au-delà du plan (P) du dossier (5).

8. Sellette (2) de parapente (10) selon l'une quelconque des revendications précédentes, **caractérisée en ce que** l'enveloppe souple (5) est réalisée en tissu hermétique à l'air.

9. Sellette (2) de parapente (10) selon la revendication précédente, **caractérisé en ce que** l'enveloppe souple est constituée par la paroi inférieure (15) à laquelle est associée une paroi latérale (16) s'étendant vers le haut, pour relier la paroi inférieure (15) à la sellette.
